# EUROPÄISCHE PATENTSCHRIFT

(11) **EP 3 652 561 B1**
(45) Veröffentlichungstag und Bekanntmachung des Hinweises auf die Patenterteilung: **23.11.2022**
(21) Anmeldenummer: 18729388.1
(22) Anmeldetag: 04.06.2018
(51) Int. Cl.: G01S 17/931, G01S 17/89, G01S 7/481

(54) **LIDAR-VORRICHTUNG ZUM SITUATIONSABHÄNGIGEN ABTASTEN VON RAUMWINKELN**
LIDAR DEVICE FOR SITUATION-DEPENDANT SCANNING OF SOLID ANGLES
DISPOSITIF LIDAR DESTINÉ AU BALAYAGE FONCTION DE LA SITUATION D'ANGLES SPATIAUX

(30) Priorität: 11.07.2017 DE 102017211817
(43) Veröffentlichungstag der Anmeldung: 20.05.2020
(73) Patentinhaber: Robert Bosch GmbH, 70442 Stuttgart (DE)
(72) Erfinder: BUETTNER, Axel, 70197 Stuttgart (DE); FREDERIKSEN, Annette, 71272 Renningen (DE)
(86) Internationale Anmeldenummer: PCT/EP2018/064548
(87) Internationale Veröffentlichungsnummer: WO 2019/011525

(56) Entgegenhaltungen:
- EP-A1- 2 362 237
- DE-A1-102008 055 159
- FR-A1- 3 038 118

## Beschreibung

Die Erfindung betrifft eine LIDAR (light detection and ranging)-Vorrichtung zum Abtasten von Raumwinkeln mit mindestens einem Strahl, mit mindestens einer horizontal rotierbar angeordneten Strahlenquelle zum Erzeugen von mindestens einem Strahl, mit mindestens einer Erzeugungsoptik zum Formen des mindestens einen erzeugten Strahls, mit einer horizontal rotierbaren Empfangsoptik zum Empfangen von mindestens einem an einem Objekt reflektierten Strahls und zum Ablenken des mindestens einen reflektierten Strahl auf einen Detektor.

### Stand der Technik

Übliche LIDAR-Vorrichtungen basieren auf unterschiedlichen Konzepten. Einerseits können sogenannte Microscanner und andererseits Macroscanner zum Einsatz kommen. Bei Macroscannern können eine Sendeeinheit und eine Empfangseinheit auf einem Rotor angeordnet sein und gemeinsam um eine Rotationsachse rotieren oder schwenken. Es kann dadurch beispielsweise ein horizontaler Abtastwinkel von 360° belichtet und abgetastet werden.

Aus der Druckschrift DE 10 2006 049 935 A1 ist beispielsweise eine LIDAR-Vorrichtung bzw. ein Macroscanner bekannt, welcher einen fokussierten Einzelstrahl zum Abtasten eines Abtastbereiches nutzt und reflektierte Strahlen im Rahmen einer Signalverarbeitung bewertet und ausgewertet.

Derartige LIDAR-Vorrichtungen weisen üblicherweise eine begrenzte vertikale Auflösung und einen relativ geringen vertikalen Abtastwinkel auf, die nicht situationsabhängig verändert werden können.

In EP 2 362 237 A1 ist eine LIDAR-Vorrichtung beschrieben, die mit Hilfe eines Strahlenteilers erzeugte Strahlen einer Strahlenquelle abzweigt und von einem Hauptstrahl abweichend ablenkt. Weiterer Stand der Technik ist aus FR 3 038 118 A1 und DE 10 2008 055 159 A1 bekannt.

### Offenbarung der Erfindung

Die der Erfindung zugrunde liegende Aufgabe kann darin gesehen werden, eine LIDAR-Vorrichtung zu schaffen, die situationsabhängig eine Belichtung von Raumwinkeln anpassen kann.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird eine LIDAR-Vorrichtung zum Abtasten von Raumwinkeln mit mindestens einem Strahl bereitgestellt. Die LIDAR-Vorrichtung weist mindestens eine horizontal rotiertbar angeordnete Strahlenquelle zum Erzeugen von mindestens einem Strahl auf. Eine Erzeugungsoptik dient zum Formen des mindestens einen erzeugten Strahls. Der erzeugte Strahl ist abhängig von einer Rotationsposition der Strahlenquelle variabel formbar.

Die Erzeugungsoptik kann aus mehreren optischen Elementen, wie beispielsweise Linsen, diffraktiven optischen Elementen, holografischen optischen Elementen und dergleichen, bestehen. Des Weiteren weist die LIDAR-Vorrichtung eine horizontal rotierbare Empfangsoptik auf, welche mindestens einen an einem Objekt reflektierten Strahl empfängt und auf einen Detektor lenkt.

Die Strahlenquelle kann zusammen mit der Erzeugungsoptik oder einem Teil der Erzeugungsoptik eine Sendeeinheit bilden. Die Strahlenquelle kann beispielsweise ein Infrarothalbleiterlaser, ein Laserbarren und dergleichen sein. Die Strahlenquelle kann somit elektromagnetische Strahlen kontinuierlich oder gepulst erzeugen.

Eine Empfangseinheit besteht aus einer Empfangsoptik und dem Detektor. Der Detektor kann beispielsweise ein Spaltendetektor sein, der in Detektorpixel unterteilt ist. Der Detektor kann ein Einzelphoton-Avalanche-Dioden Detektor (engl. Single Photon Avalanche Diode bzw. SPAD) sein. Der SPAD-Detektor kann durch eine hohe Empfindlichkeit eine hohe Auflösung bei geringem Nutzlicht unter Anwendung einer zeitkorrelierten Einzelphotonenzählung (timecorrelated single photon counting, TCSPC) ermöglichen. Hierdurch kann eine vertikale Auflösung der LIDAR-Vorrichtung detektorseitig verbessert werden.

Die Sendeeinheit und die Empfangseinheit können synchron zueinander horizontal rotieren und somit einen horizontalen Abtastwinkel belichten und detektieren. Die Sendeeinheit und die Empfangseinheit können zeitlich sowohl parallel als auch seriell betrieben werden. Beispielsweise können die Sendeeinheit und die Empfangseinheit nebeneinander rotierbar angeordnet sein oder entlang einer Rotationsachse axial untereinander angeordnet sein.

Die Sendeeinheit kann einen oder mehrere vertikal übereinander verlaufende Strahlen erzeugen, die einen vertikalen Abtastwinkel definieren und belichten. Eine vertikale Auflösung der LIDAR-Vorrichtung kann anschließend durch den Spaltendetektor realisiert werden.

Die Erzeugungsoptik dient zum Formen des mindestens einen erzeugten Strahls und weist mindestens eine veränderbare Linse auf, welche den mindestens einen erzeugten Strahl anpassen bzw. verändern kann. Durch eine derart variable Erzeugungsoptik kann beispielsweise ein Fokus und/oder eine Ablenkrichtung sendeseitig verändert werden. Die Erzeugungsoptik kann sowohl als Ganzes mit der Strahlenquelle rotierbar, als auch teilweise rotierbar und teilweise stationär angeordnet sein. Somit können von der Strahlenquelle erzeugte Strahlen derart beeinflusst und variierbar geformt werden, dass die LIDAR-Vorrichtung optimal an bestimmte Umgebungen, Geschwindigkeiten, Ausrichtungen und dergleichen angepasst werden kann. Bei einer derartigen LIDAR-Vorrichtung kann beispielsweise situationsabhängig die vertikale Auflösung und/oder die Reichweite variiert werden. Es kann beispielsweise ein vertikaler Abtastwinkel durch stärkere Fokussierung verringert und die Reichweite eines Abtastbereiches erhöht werden. Andererseits kann ein vertikaler Abtastwinkel vergrößert werden bei gleichzeitig geringerer Reichweite oder es kann ein vertikaler Abtastwinkel axial verschoben bzw. versetzt werden. Somit können beispielsweise bei einem Fahrzeug die Flankenbereiche durch die LIDAR-Vorrichtung mit einer geringeren Auflösung durch den Detektor und mit einem größeren vertikalen Abtastwinkel abgetastet werden. Bei dem Detektor kann hierzu beispielsweise jedes zweite oder jedes dritte Detektorpixel zum Auswerten genutzt werden. In Fahrtrichtung kann dagegen eine hohe Reichweite bei einem geringen vertikalen Abtastwinkel sinnvoll und realisierbar sein. Die Belichtung der LIDAR-Vorrichtung kann situationsabhängig variiert werden. Beispielsweise kann die Belichtung an eine Bergauffahrt, Bergabfahrt, Landstraßenfahrt, Autobahnfahrt, Stadtfahrt und dergleichen angepasst werden. Die Erzeugungsoptik kann auch aus mehreren veränderbaren und unveränderbaren Linsen und/oder optischen Elementen bestehen.

Des Weiteren kann die LIDAR-Vorrichtung ein Umschalten zwischen unterschiedlichen Belichtungszuständen, wie beispielsweise zu einem größeren vertikalen Abtastwinkel für eine großflächige Abdeckung einer nahen Umgebung, ermöglichen und so zu einer Lokalisierung im komplexen Umfeldern genutzt werden. Als eine variierbare Linse bzw. eine adaptive Optik können beispielsweise veränderbare Linsen auf Basis von elektroaktiven Polymeren verwendet werden.

Nach einem Ausführungsbeispiel der LIDAR-Vorrichtung weist die Strahlenquelle Einzelemitter auf und erzeugt mindestens zwei vertikal zueinander winkelversetzte oder ortsversetzte Strahlen. Die Strahlenquelle kann beispielsweise ein Laserbarren mit einer Vielzahl an Einzelemittern sein. Jeder Emitter kann somit mindestens einen elektromagnetischen Strahl erzeugen. Alternativ können beispielsweise mehrere Halbleiterlaser nebeneinander angeordnet sein. Insbesondere bei einer reihenförmigen Anordnung der Emitter kann die Strahlenquelle eine pixelweise bzw. punktförmige oder eine linienförmige vertikale Ausleuchtung des Abtastbereiches realisieren. So kann der vertikale Abtastwinkel teilweise oder vollständig durch die erzeugten Strahlen belichtet werden.

Gemäß einem weiteren Ausführungsbeispiel der LIDAR-Vorrichtung ist der mindestens eine Strahl radial variabel fokussierbar. Die veränderliche Linse der Erzeugungsoptik kann ihre Brennweite verändern und somit mindestens einen erzeugten Strahl in einer Brennebene beispielsweise punktförmig fokussieren. Der radiale Abstand der Brennebene von der LIDAR-Vorrichtung kann durch die veränderbare Linse beeinflusst und eingestellt werden.

Nach einem weiteren Ausführungsbeispiel der LIDAR-Vorrichtung ist der mindestens eine Strahl axial variabel fokussierbar. Die veränderbare Linse kann insbesondere in ihrer Form verändert werden. Hierdurch kann der mindestens eine erzeugte Strahl axial abgelenkt bzw. versetzt werden. So kann beispielsweise ein vertikaler Abtastwinkel realisiert werden, der höher oder tiefer verläuft. Hierdurch kann beispielsweise bei einer automobilen Anwendung der LIDAR-Vorrichtung bei einer Bergfahrt eine Höhe und eine Position des vertikalen Abtastbereiches aktiv verändert werden.

Gemäß einem weiteren Ausführungsbeispiel der LIDAR-Vorrichtung ist der mindestens eine Strahl zeitabhängig variabel formbar. Mit Hilfe der mindestens einen veränderbaren Linse kann der mindestens eine erzeugte Strahl derart sendeseitig verändert werden, dass beispielsweise bei jeder zweiten Umdrehung der Sendeeinheit die erzeugten Strahlen verändert werden oder eine Umschaltung zwischen zwei oder mehr definierten Belichtungsmodi stattfindet. Alternativ oder zusätzlich kann eine Anpassung der erzeugten Strahlen auch innerhalb einer Umdrehung der Sendeeinheit erfolgen.

Nach einem weiteren Ausführungsbeispiel der LIDAR-Vorrichtung ist der mindestens eine Strahl abhängig von einer Rotationsposition der Strahlenquelle variabel formbar. Hierdurch kann der mindestens eine erzeugte Strahl innerhalb einer Umdrehung bzw. Rotation der Sendeeinheit mindestens einmal angepasst oder variiert werden. So kann beispielsweise eine auf einem Fahrzeugdach angeordnete LIDAR-Vorrichtung bei einer Rotationsposition in Richtung einer Fahrzeugfront während einer Fahrt die erzeugten Strahlen möglichst weit von der LIDAR-Vorrichtung entfernt fokussieren und somit eine maximale Reichweite der Belichtung ermöglichen. An den Fahrzeugflanken können die erzeugten Strahlen einen möglichst großen vertikalen Abtastwinkel aufweisen bei einer verhältnismäßig kleinen Reichweite der LIDAR-Vorrichtung. Während eines Einparkvorganges können die erzeugten Strahlen entlang der gesamten Umdrehung der Sendeeinheit auf eine geringe Reichweite beschränkt sein. So kann ein horizontaler Abtastwinkel von 360° in mehrere Winkelabschnitte unterteilt werden. Innerhalb der jeweiligen Winkelabschnitte kann der mindestens eine erzeugte Strahl somit konstant sein oder variiert bzw. verändert werden.

Gemäß einem weiteren Ausführungsbeispiel der LIDAR-Vorrichtung erzeugt die Strahlenquelle zeitabhängig mindestens einen winkelversetzten oder ortsversetzten Strahl. Alternativ oder zusätzlich zu einer Steuerung der Auflösung durch den Detektor, indem eine begrenzte Anzahl an Detektorpixeln zum weiteren Auswerten verwendet wird, kann eine Belichtung durch die Strahlenquelle angepasst werden. Es können beispielsweise alle Emitter der Strahlenquelle aktiviert sein oder nur ein definierter Teil aller Emitter. Alternativ kann auch jeder zweite oder dritte Emitter der Strahlenquelle aktiviert werden. Bei Anwendungen mit maximal notwendiger Reichweite können alle Emitter aktiviert werden. Bei Anwendungen mit einer geringeren Anforderung an eine maximale Entfernung kann eine Intensität der Belichtung durch weniger aktive Emitter reduziert werden. Hierdurch kann beispielsweise verhindert werden, dass der Detektor bei belichteten Objekten in einem Nahbereich eine Sättigung oder Überbelichtung erfährt.

Nach einem weiteren Ausführungsbeispiel der LIDAR-Vorrichtung erzeugt die Strahlenquelle abhängig von einer Rotationsposition der Strahlenquelle mindestens einen winkelversetzten oder ortsversetzten Strahl. Die Anpassung der Strahlenleistung durch ein Zuschalten oder Abschalten von Emittern der Strahlenquelle kann zeitabhängig oder basierend auf einer Rotationsposition der Strahlenquelle bzw. der Sendeeinheit realisiert werden. Der horizontale Abtastwinkel kann hierdurch in mehrere Winkelbereiche mit unterschiedlichen Funktionen unterteilt werden. Dies ermöglicht beispielsweise eine umfassendere Messung einer fahrzeugnahen Umgebung, welche für verschiedene Funktionen einer Umfelderkennung für automatisiertes Fahren benötigt werden kann. Es kann hierdurch beispielsweise eine Erkennung einer Fahrbahnbegrenzung optimiert oder eine befahrbare Fläche besser abgeschätzt werden. So kann eine Lokalisierung der LIDAR-Vorrichtung auch in komplexen Umgebungen ermöglicht werden, da die LIDAR-Vorrichtung bestimmte unerkannte oder fehlerhaft erkannte Bereiche des Umfeldes mehrmals mit unterschiedlich geformten Strahlen abtasten kann, um mehr Informationen über einen Raumwinkel zu erlangen.

Gemäß einem weiteren Ausführungsbeispiel der LIDAR-Vorrichtung weist die Erzeugungsoptik mindestens ein passives optisches Element auf. Neben unveränderbaren Linsen kann die Erzeugungsoptik optische Elemente aufweisen, die nicht rotierbar angeordnet sind. Diese optischen Elemente können andere Linsen, Filter, diffraktive optische Elemente, wie beispielsweise volumenholografische optische Elemente und dergleichen sein. Die optischen Elemente können beispielsweise an einem Gehäuse der LIDAR-Vorrichtung angeordnet sein. Innerhalb einer gesamten oder teilweisen horizontalen Abtastbereiches und/oder vertikalen Abtastwinkels ist somit mindestens ein optisches Element in einem Strahlenpfad des erzeugten Strahls angeordnet und kann somit den mindestens einen erzeugten Strahl formen, bevor der mindestens eine erzeugte Strahl in den abzutastenden Raumwinkel emittiert wird. Ein derartiges passives optisches Element ist Teil der Erzeugungsoptik und kann beispielsweise in Form einer Folie ausgeführt sein, die umfangseitig stationär um die Sendeeinheit angeordnet ist. Hierdurch können unterschiedliche Bereiche des abzutastenden Raumwinkels angepasst belichtet und abgetastet werden. Eine aktive Steuerung kann hierbei entfallen und somit eine derartige LIDAR-Vorrichtung technisch vereinfachen.

Nach einem weiteren Ausführungsbeispiel der LIDAR-Vorrichtung ist der mindestens eine Strahl durch das mindestens eine passive optische Element abhängig von einer Rotationsposition der Strahlenquelle formbar. Hierbei kann vorzugsweise die Sendeeinheit axial auf einer anderen Ebene angeordnet sein als die Empfangseinheit. Somit kann die Sendeeinheit zumindest teilweise entlang ihrer horizontalen Rotation mindestens einen erzeugten Strahl durch mindestens ein passives optisches Element leiten. Die passiven optischen Elemente können durchgehend oder nur innerhalb bestimmter Rotationspositionen angeordnet sein. Die passiven optischen Elemente können beispielsweise auf eine Innenseite eines Emissionsfensters der LIDAR-Vorrichtung auflaminiert oder geklebt sein. Die passiven optischen Elemente können räumlich voneinander getrennt sein oder nahtlos bzw. graduell ineinander übergehen.

Gemäß einem weiteren vorteilhaften Ausführungsbeispiel der LIDAR-Vorrichtung ist das mindestens eine passive optische Element ein holografisches optisches Element. Die passiven optischen Elemente sind vorteilhafterweise als holografische optische Elemente ausgeführt. Insbesondere können die holografischen optischen Elemente Volumenhologramme sein. Im Gegensatz zu konventionellen Optiken kann bei holographisch optischen Elementen, welche als Volumenhologramme realisiert sind, die Strahlumlenkung nicht durch Brechung vorgegeben werden, sondern durch Beugung am Volumengitter. Die holographisch optischen Elemente lassen sich sowohl in Transmission als auch in Reflexion fertigen und ermöglichen eine freie Wahl von Einfalls- und Ausfalls- bzw. Beugungswinkeln. Um ein holografisches optisches Element zu erzeugen kann ein holografisches Material auf einer Trägerfolie aufgebracht und anschließen in einem Aufnahmeprozess belichtet werden, damit die optische Funktion in das Material eingebracht wird. Dieses Belichtungsverfahren kann analog beispielsweise pixelweise gedruckt werden. Durch eine Volumenbeugung an dem Volumenhologramm weist das holographisch optische Element zusätzlich eine charakteristische Wellenlängen- und Winkelselektivität oder auch eine Filterfunktion auf.

Nach einem weiteren Ausführungsbeispiel der LIDAR-Vorrichtung weist die Erzeugungsoptik mindestens eine veränderbare Optik auf. Die veränderbare bzw. adaptive Optik kann insbesondere eine Flüssiglinse sein und einen Teil der Erzeugungsoptik darstellen. Derartige Linsen können ihre Brennweite abhängig von einer angelegten Spannung variieren. Diese Funktion kann beispielsweise auf dem Prinzip der Elektrobenetzung basieren. Mit einer Flüssiglinse ist nicht nur eine unterschiedliche
Fokussierung möglich sondern auch eine Strahlablenkung bzw. ein Strahlenversetz in vertikaler bzw. axialer Richtung oder in horizontaler Richtung.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer LIDAR-Vorrichtung gemäß einem ersten Ausführungsbeispiel,
- Fig. 2a: eine schematische Darstellung einer Sendeeinheit einer LIDAR-Vorrichtung gemäß einem zweiten Ausführungsbeispiel,
- Fig. 2b: eine schematische Darstellung einer Sendeeinheit einer LIDAR-Vorrichtung gemäß einem dritten Ausführungsbeispiel,
- Fig. 3a: eine schematische Darstellung einer LIDAR-Vorrichtung gemäß einem vierten Ausführungsbeispiel und
- Fig. 3b: eine schematische Draufsicht auf ein passives optisches Element der LIDAR-Vorrichtung gemäß dem vierten Ausführungsbeispiel.

In den Figuren weisen dieselben konstruktiven Elemente jeweils dieselben Bezugsziffern auf.

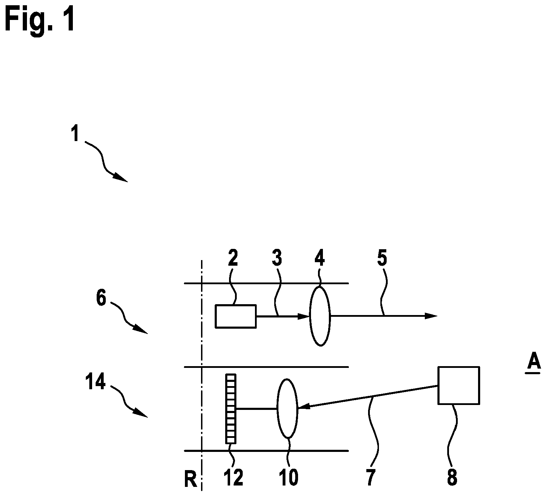

Die Figur 1 zeigt eine schematische Darstellung einer LIDAR-Vorrichtung 1 gemäß einem ersten Ausführungsbeispiel. Die LIDAR-Vorrichtung 1 weist eine Strahlenquelle 2 auf. Die Strahlenquelle 2 kann gemäß dem Ausführungsbeispiel beispielsweise ein Halbleiterlaser 2 sein, der Laserstrahlen 3 erzeugen kann. Die erzeugten Strahlen 3 können anschließend von einer Erzeugungsoptik 4 geformt bzw. angepasst werden. Die geformten Strahlen 5 werden anschließend von der LIDAR-Vorrichtung 1 in Richtung eines Raumwinkels A emittiert. Die Erzeugungsoptik 4 ist eine Flüssiglinse 4, die über nicht dargestellte elektrische Anbindungen mit elektrischer Spannung versorgt werden kann und somit ihre optischen Eigenschaften spannungsabhängig ändern kann. Die Strahlenquelle 2 und die Erzeugungsoptik bilden zusammen eine Sendeeinheit 6.

Sofern sich Objekte 8 in dem Raumwinkel A befinden, können die geformten Strahlen 5 an den Objekten 8 reflektiert oder gestreut werden. Die gestreuten bzw. reflektierten Strahlen 7 können von einer Empfangsoptik 10 empfangen und auf einen Detektor 12 gelenkt werden. Der Detektor 12 ist ein Spaltendetektor, der aus einer Vielzahl an Detektorpixeln besteht, die in einer Reihe angeordnet sind und eine vertikale Auflösung der LIDAR-Vorrichtung 1 definieren. Der Detektor 12 und die Empfangsoptik 10 bilden hier eine Empfangseinheit 14 der LIDAR-Vorrichtung 1.

Die Sendeeinheit 6 und die Empfangseinheit 14 sind horizontal um eine Rotationsachse R um 360° rotierbar und sind axial übereinander angeordnet.

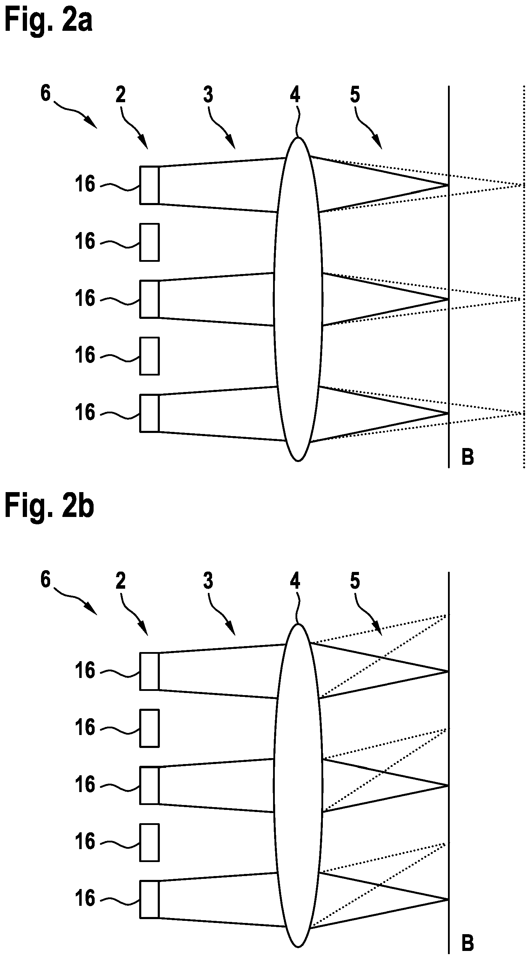

In den Figuren 2a und 2b sind schematische Darstellungen von Sendeeinheiten 6 einer LIDAR-Vorrichtung 1 gemäß einem zweiten und einem dritten Ausführungsbeispiel dargestellt. Die Strahlenquellen 2 sind hier jeweils als Laserbarren 2 mit jeweils fünf Einzelemittern 16 ausgeführt. Dargestellt ist ein Einsatz der Strahlenquelle 2 mit einer reduzierten Anzahl an aktivierten Emittern 16. Gemäß dem Ausführungsbeispiel sind drei von den fünf Einzelemittern 16 der Strahlenquelle 2 aktiviert und erzeugten somit Strahlen 3. Die erzeugten Strahlen 3 werden von der Flüssiglinse 4 variiert bzw. angepasst. Die geformten Strahlen 5 weisen eine gemeinsame Brennebene B auf und sind in der Brennebene B beispielsweise punktförmig ausgeführt. Die jeweiligen erzeugten Strahlen 3 können durch die Erzeugungsoptik 4 auch zu einem in der Brennebene B linienförmigen Strahl vereinigt werden. Die Erzeugungsoptik 4 bzw. die mindestens eine Flüssiglinse 4 der Erzeugungsoptik kann die erzeugten Strahlen 3 abhängig von einer anliegenden Spannung unterschiedlich stark bündeln, sodass die Brennebene B der geformten Strahlen 5 verschoben werden kann. Alternativ oder zusätzlich können die geformten Strahlen 5 abhängig von einer weiteren anliegenden Spannung in einer vertikalen bzw. axialen oder horizontalen Richtung abgelenkt werden und somit ihre Fokuspunkte innerhalb der Brennebene B örtlich versetzten. Die gestrichelten Strahlengänge verdeutlichen die Effekte der Flüssiglinse 4 auf die erzeugten Strahlen 3.

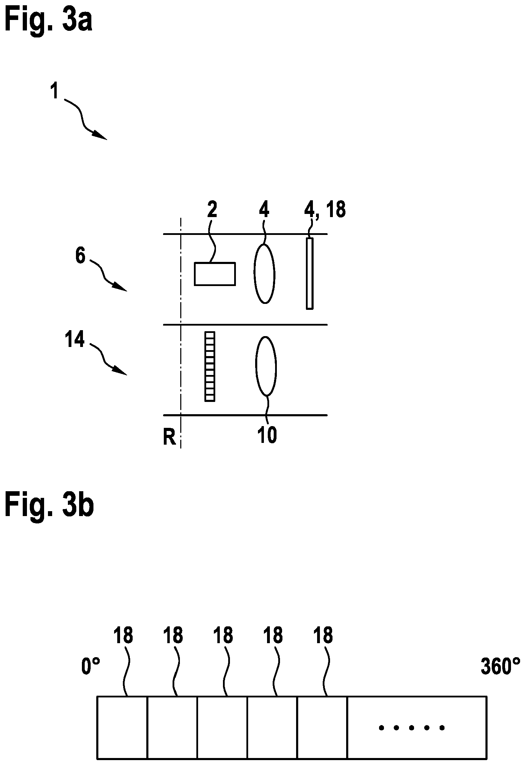

Die Figur 3a zeigt eine schematische Darstellung einer LIDAR-Vorrichtung 1 gemäß einem vierten Ausführungsbeispiel. Im Unterschied zu der LIDAR-Vorrichtung 1 gemäß dem ersten Ausführungsbeispiel weist die LIDAR-Vorrichtung 1 hier eine Erzeugungsoptik 4 mit einem passiven optischen Element 18 auf. Die Erzeugungsoptik 4 kann hierbei veränderliche Linsen 4 als auch unveränderliche Linsen aufweisen. Das passive optische Element 18 ist hier ein Volumenhologramm 18, welches als eine Folie ausgeführt ist. Die Folie ist umfangsseitig stationär um die rotierbare Sendeeinheit 6 herum angeordnet. Während einer Rotation der Sendeeinheit 6 um die Rotationsachse R werden somit alle Bereiche der Folie nacheinander belichtet. Die unterschiedlichen Bereiche der Folie bestehen aus unterschiedlichen Volumenhologrammen 18, welche unterschiedliche oder gleiche optische Funktionen aufweisen. Die Figur 3b zeigt eine derartige Folie in einem ausgebreiteten Zustand. Es wird ein Winkelbereich von 0° bis 360° mit unterschiedlichen rechteckigen Volumenhologrammen 18 der Folie gezeigt. Erzeugte Strahlen 3 werden somit nach einem Formen durch die Linse 4 abhängig von einer horizontalen Rotationsposition der Sendeeinheit 6 durch die jeweiligen Volumenhologramme 18 zusätzlich geformt oder gefiltert.

## Patentansprüche

1. LIDAR-Vorrichtung (1) zum Abtasten von Raumwinkeln (A) mit mindestens einem Strahl (5), mit mindestens einer horizontal rotierbar angeordneten Strahlenquelle (2) zum Erzeugen von mindestens einem Strahl (3), mit mindestens einer Erzeugungsoptik (4) zum Formen des mindestens einen erzeugten Strahls (3), mit einer horizontal rotierbaren Empfangsoptik (10) zum Empfangen von mindestens einem an einem Objekt (8) reflektierten Strahls (7) und zum Ablenken des mindestens einen reflektierten Strahls (7) auf einen Detektor (12), **dadurch gekennzeichnet, dass** die Vorrichtung so ausgestaltet ist, dass der mindestens eine erzeugte Strahl (3) abhängig von einer Rotationsposition der Strahlenquelle (2) variabel geformt wird.

2. LIDAR-Vorrichtung nach Anspruch 1, wobei die Strahlenquelle (2) Einzelemitter (16) aufweist und ausgestaltet ist mindestens zwei vertikal zueinander winkelversetzte oder ortsversetzte Strahlen (3) zu erzeugen.

3. LIDAR-Vorrichtung nach Anspruch 1 oder 2, wobei der mindestens erzeugte eine Strahl (3) relativ zur Rotationsachse (R) in radialer Richtung variabel fokussiert wird.

4. LIDAR-Vorrichtung nach einem der Ansprüche 1 bis 3, wobei der mindestens eine erzeugte Strahl (3) relativ zur Rotationsachse (R) in axialer Richtung variabel fokussiert wird.

5. LIDAR-Vorrichtung nach einem der Ansprüche 1 bis 4, wobei der mindestens eine erzeugte Strahl (3) zeitabhängig variabel geformt wird.

6. LIDAR-Vorrichtung nach einem der Ansprüche 1 bis 5, wobei die Strahlenquelle (2, 16) zeitabhängig mindestens einen winkelversetzten oder ortsversetzten Strahl (3) erzeugt.

7. LIDAR-Vorrichtung nach einem der Ansprüche 1 bis 6, wobei die Strahlenquelle (2, 16) abhängig von einer Rotationsposition der Strahlenquelle (2) mindestens einen winkelversetzten oder ortsversetzten Strahl (3) erzeugt.

8. LIDAR-Vorrichtung nach einem der Ansprüche 1 bis 7, wobei die Erzeugungsoptik (4) mindestens ein passives optisches Element (18) aufweist.

9. LIDAR-Vorrichtung nach Anspruch 9, wobei der mindestens eine erzeugte Strahl (3) durch das mindestens eine passive optische Element (18) abhängig von einer Rotationsposition der Strahlenquelle (2) (2) geformt wird.

10. LIDAR-Vorrichtung nach einem der Ansprüche 8 bis 9, wobei das mindestens eine passive optische Element (18) ein holografisches optisches Element (18) ist.

11. LIDAR-Vorrichtung nach einem der Ansprüche 1 bis 10, wobei die Erzeugungsoptik (4) mindestens eine veränderbare Optik (4) aufweist.

## Claims

1. LIDAR device (1) for scanning solid angles (A) with at least one beam (5), comprising at least one horizontally rotatably arranged beam source (2) for generating at least one beam (3), comprising at least one generating optical unit (4) for shaping the at least one generated beam (3), comprising a horizontally rotatable receiving optical unit (10) for receiving at least one beam (7) reflected at an object (8) and for deflecting the at least one reflected beam (7) onto a detector (12), **characterized in that** the device is configured such that the at least one generated beam (3) is shaped variably depending on a rotational position of the beam source (2).

2. LIDAR device according to Claim 1, wherein the beam source (2) comprises individual emitters (16) and is configured to generate at least two beams (3) which are spatially offset or angularly offset vertically with respect to one another.

3. LIDAR device according to Claim 1 or 2, wherein the at least one generated beam (3) is focussed variably in a radial direction relative to the rotation axis (R) .

4. LIDAR device according to any of Claims 1 to 3, wherein the at least one generated beam (3) is focussed variably in an axial direction relative to the rotation axis (R).

5. LIDAR device according to any of Claims 1 to 4, wherein the at least one generated beam (3) is shaped variably in a time-dependent manner.

6. LIDAR device according to any of Claims 1 to 5, wherein the beam source (2, 16) generates at least one angularly offset or spatially offset beam (3) in a time-dependent manner.

7. LIDAR device according to any of Claims 1 to 6, wherein the beam source (2, 16) generates at least one angularly offset or spatially offset beam (3) depending on a rotational position of the beam source (2).

8. LIDAR device according to any of Claims 1 to 7, wherein the generating optical unit (4) comprises at least one passive optical element (18).

9. LIDAR device according to Claim 9, wherein the at least one generated beam (3) is shaped by the at least one passive optical element (18) depending on a rotational position of the beam source (2) (2).

10. LIDAR device according to either of Claims 8 and 9, wherein the at least one passive optical element (18) is a holographic optical element (18).

11. LIDAR device according to any of Claims 1 to 10, wherein the generating optical unit (4) comprises at least one variable optical unit (4).

## Revendications

1. Dispositif LIDAR (1) destiné à balayer des angles solides (A) à l'aide d'au moins un faisceau (5), ledit dispositif comprenant au moins une source de rayonnement (2) disposée de manière à pouvoir tourner horizontalement et destinée à générer au moins un faisceau (3), au moins une optique de génération (4) destinée à mettre en forme l'au moins un faisceau généré (3), une optique de réception (10) disposée de manière à pouvoir tourner horizontalement et destinée à recevoir au moins un faisceau (7) réfléchi par un objet (8) et à dévier l'au moins un faisceau réfléchi (7) sur un détecteur (12), **caractérisé en ce que** le dispositif est conçu de telle sorte que l'au moins un faisceau généré (3) soit formé de manière variable en fonction d'une position de rotation de la source de rayonnement (2) .

2. Dispositif LIDAR selon la revendication 1, la source de rayonnement (2) comportant des émetteurs individuels (16) et étant conçue pour générer au moins deux faisceaux (3) décalés l'un de l'autre localement ou angulairement dans la direction verticale.

3. Dispositif LIDAR selon la revendication 1 ou 2, l'au moins un faisceau généré (3) étant focalisé de manière variable dans une direction radiale par rapport à l'axe de rotation (R).

4. Dispositif LIDAR selon l'une des revendications 1 à 3, l'au moins un faisceau généré (3) étant focalisé de manière variable dans la direction axiale par rapport à l'axe de rotation (R).

5. Dispositif LIDAR selon l'une des revendications 1 à 4, l'au moins un faisceau généré (3) étant formé de manière variable en fonction du temps.

6. Dispositif LIDAR selon l'une des revendications 1 à 5, la source de rayonnement (2, 16) générant en fonction du temps au moins un faisceau (3) décalé localement ou angulairement.

7. Dispositif LIDAR selon l'une des revendications 1 à 6, la source de rayonnement (2, 16) générant, en fonction d'une position de rotation de la source de rayonnement (2), au moins un faisceau (3) décalé localement ou angulairement.

8. Dispositif LIDAR selon l'une des revendications 1 à 7, l'optique de génération (4) comportant au moins un élément optique passif (18).

9. Dispositif LIDAR selon la revendication 9, l'au moins un faisceau généré (3) étant mis en forme par l'au moins un élément optique passif (18) en fonction d'une position de rotation de la source de rayonnement (2) (2).

10. Dispositif LIDAR selon l'une des revendications 8 à 9, l'au moins un élément optique passif (18) étant un élément optique holographique (18).

11. Dispositif LIDAR selon l'une des revendications 1 à 10, l'optique de génération (4) comportant au moins une optique variable (4).
